# FASCICULE DE BREVET EUROPEEN

(11) **EP 2 783 946 B1**
(45) Date de publication et mention de la délivrance du brevet: **27.04.2016**
(21) Numéro de dépôt: 14157707.2
(22) Date de dépôt: 04.03.2014
(51) Int. Cl.: B62D 7/20, B60G 7/00

(54) **Biellette de direction allégée à pivot étagé**
Leichtere Ausführung einer Lenkspurstange mit abgestufter Drehachse
Lightened tie rod with stepped pivot

(30) Priorité: 27.03.2013 FR 1352759
(43) Date de publication de la demande: 01.10.2014
(73) Titulaire: Jtekt Europe, 69540 Irigny (FR)
(72) Inventeur: Durand, Philippe, 69100 VILLEURBANNE (FR); Chapel, Vivien, 69005 LYON (FR)
(74) Mandataire: Chevalier, Renaud Philippe

(56) Documents cités:
- EP-A1- 1 911 612
- WO-A1-2007/121725
- FR-A1- 2 906 213

## Description

La présente invention se rapporte au domaine technique général des dispositifs de direction permettant de contrôler l'orientation d'un organe effecteur orientable de la direction d'un véhicule, et plus particulièrement de modifier et contrôler l'orientation de la ou des roues directrices d'un train roulant de véhicule, notamment de véhicule automobile.

Elle concerne plus particulièrement les biellettes de direction destinées à transmettre les efforts de manoeuvre depuis l'extrémité d'une crémaillère de direction, elle-même mue à translation par une colonne de direction contrôlée par un volant de conduite, jusqu'au porte-fusée de la roue directrice correspondante.

Il est connu d'employer des biellettes pour transmettre des efforts mécaniques alternés de traction et de compression entre une crémaillère de direction et un porte-fusée afin de modifier l'orientation en lacet de ce dernier, et par conséquent de la roue qu'il porte.

L'une des difficultés usuellement rencontrées pour la mise en oeuvre de telles biellettes tient cependant à leur dimensionnement.

Lesdites biellettes doivent en effet satisfaire en pratique à deux critères antinomiques, en ceci qu'elles doivent d'une part présenter, en fonctionnement normal, une résistance mécanique suffisante pour ne pas se déformer plastiquement, notamment en traction et au flambage, sous les contraintes de manoeuvre, et d'autre part former un organe martyr qui, en cas de choc, c'est-à-dire au-delà d'un seuil d'effort prédéterminé, offre une déformation programmée, par flambage, afin de protéger le reste du système de direction ainsi que le porte-fusée.

A ce titre, il est connu de réaliser une tige de biellette présentant globalement une section transverse relativement forte et d'usiner localement, dans ladite tige, généralement à proximité de l'interface avec le porte-fusée, une gorge fusible qui forme un tronçon de fragilisation au niveau duquel la déformation plastique pourra se produire de manière prévisible et contrôlée.

Cependant, un tel agencement, connu par exemple du document WO-2007/12 17 25, peut parfois présenter certains inconvénients.

En effet, la réalisation de la gorge fusible ajoute une opération dans le processus de fabrication de la biellette, ce qui augmente le coût, la durée, et la dépense en énergie dudit processus.

En outre, il est parfois nécessaire, pour que les biellettes ainsi obtenues satisfassent au critère de résistance mécanique en fonctionnement normal, de conférer auxdites biellettes des sections droites importantes, notamment du côté de la crémaillère, qui rendent lesdites biellettes relativement massives, lourdes et encombrantes.

Or, dans le domaine de la construction automobile, on cherche désormais à réduire systématiquement le poids des véhicules, et par conséquent celui de leurs différents organes constitutifs, ainsi que l'espace occupé par les différents systèmes embarqués.

Les objets assignés à l'invention visent par conséquent à remédier aux inconvénients susmentionnés et à proposer un nouveau type de biellette de direction qui d'une part concilie une bonne tenue mécanique vis-à-vis des efforts de manoeuvre normaux avec un comportement efficace et prévisible de déformation protectrice en cas de choc, et qui d'autre part possède une structure relativement simple, légère et peu encombrante.

Les objets assignés à l'invention sont atteints au moyen d'une biellette de direction comportant une tige-pivot qui comprend d'une part un tronçon de tête sur lequel est fixé un premier organe d'articulation amont, tel qu'une sphère de rotule, destiné à l'accouplement de la biellette avec un premier organe effecteur, du genre crémaillère de direction, et d'autre part un tronçon de queue sur lequel est fixé un second organe d'articulation aval, tel qu'un palier sphérique de rotule, destiné à l'accouplement de la biellette avec un second organe effecteur, du genre porte-fusée, le tronçon de tête et le tronçon de queue s'étendant longitudinalement d'un seul tenant, selon un axe directeur (XX'), sur la majorité de la longueur d'entraxe L0 qui sépare le premier organe d'articulation du second organe d'articulation, ladite tige-pivot étant caractérisée en ce que le tronçon de tête présente, dans le sens amont-aval de l'axe directeur (XX'), une décroissance progressive de sa section droite, en ceci qu'il existe au moins un plan de jauge, normal à l'axe directeur (XX') et situé à une abscisse comprise entre 15 % et 40 % de l'entraxe L0 de la biellette, dans lequel la superficie de la section droite de la tige-pivot, dite « section de jauge » est d'une part strictement inférieure à la superficie de la plus grande section droite de ladite tige-pivot, située en amont du plan de jauge, et d'autre part supérieure ou égale à la superficie des sections droites situées en aval dudit plan de jauge.

Avantageusement, la géométrie de biellette conforme à l'invention permet d'affiner progressivement la tige-pivot, et donc plus globalement la biellette, en réduisant la section de celle-ci au fur et à mesure que l'on s'éloigne du premier organe d'articulation.

Une telle répartition de matière permet avantageusement de conserver, notamment dans le tronçon de tête, des sections droites suffisamment étendues pour garantir une bonne rigidité fonctionnelle de la biellette en fonctionnement normal, tout en réduisant la raideur globale de ladite biellette, notamment à la flexion, par rapport aux biellettes massives connues, ce qui confère à ladite biellette une capacité à se déformer plastiquement en cas de choc, selon un scénario de déformation relativement prévisible.

Ce choix de répartition de matière permet en outre de minimiser la quantité de matière utilisée, tout en satisfaisant aux critères de dimensionnement susmentionnés, et ainsi de réaliser une économie de matière lors de la fabrication, ainsi qu'un allègement de la biellette et par conséquent du véhicule qu'elle intègre.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue de côté, une variante de réalisation de tige-pivot de biellette de direction connue de l'art antérieur.
La figure 2 illustre, selon une vue de côté, un sous-ensemble de biellette conforme à l'invention comprenant le premier organe d'articulation en place sur la tige-pivot.
La figure 3 illustre, selon une vue de côté, incluant des représentations des sections droites sorties, une variante de réalisation de biellette conforme à l'invention utilisant la tige-pivot de la figure 2.
La figure 4 illustre, selon une vue de côté, une superposition de la tige-pivot de la figure 2 et de la tige-pivot de l'art antérieur de la figure 1, de sorte à faire apparaître comparativement le gain de matière, et donc de poids, réalisé grâce à l'invention.

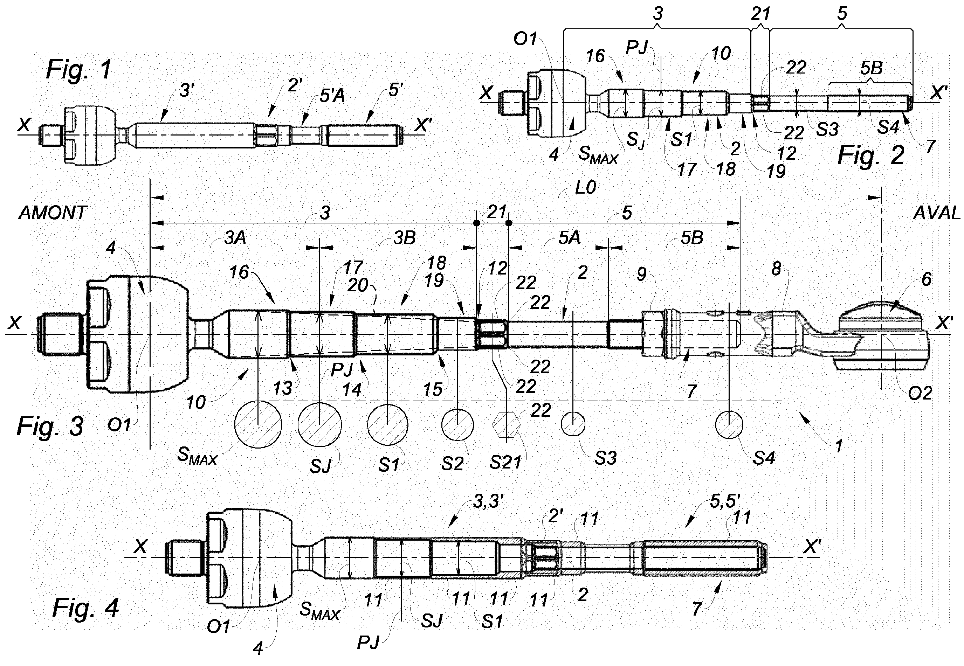

La présente invention concerne une biellette de direction 1 comportant une tige-pivot 2 qui comprend, tel que cela est notamment illustré sur la figure 3, d'une part un tronçon de tête 3 sur lequel est fixé un premier organe d'articulation 4 amont, tel qu'une sphère de rotule, destiné à l'accouplement de la biellette 1 avec un premier organe effecteur (non représenté), du genre crémaillère de direction, et d'autre part un tronçon de queue 5 sur lequel est fixé un second organe d'articulation 6 aval, tel qu'un palier sphérique de rotule, destiné à l'accouplement de la biellette 1 avec un second organe effecteur (non représenté), du genre porte-fusée.

Selon l'invention, le tronçon de tête 3 et le tronçon de queue 5 s'étendent longitudinalement d'un seul tenant, selon un axe directeur (XX'), sur la majorité de la longueur d'entraxe L0 qui sépare le premier organe d'articulation 4 du second organe d'articulation 6.

Ainsi, la tige-pivot forme donc un organe monolithique qui occupe d'un seul tenant, en comptant son tronçon de tête 3 et son tronçon de queue 5, au moins 50 % de ladite longueur d'entraxe L0, voire au moins 75 % de ladite longueur d'entraxe L0, et par lequel cheminent les efforts alternés de traction et de compression qui sont transmis par le premier organe d'articulation 4 au second organe d'articulation 6 et réciproquement.

Avantageusement, la réalisation monolithique de la tige-pivot 2, incluant en enfilade le tronçon de tête 3 et le tronçon de queue 5 d'un seul tenant, garantit la robustesse et la rigidité de ladite tige-pivot 2, ainsi que sa relative simplicité de fabrication.

Ladite tige-pivot 2 peut en effet être réalisée par exemple par tout procédé de mise en forme ou d'usinage approprié, à partir d'un rondin plein ou d'un tube creux.

On peut notamment mettre en oeuvre à cet effet un procédé par déformation plastique à froid, par exemple un tréfilage suivi d'une frappe à froid. Au besoin, certaines zones fonctionnelles pourront faire l'objet de reprise d'usinage.

De préférence, l'axe directeur (XX'), et par conséquent la tige-pivot 2, sera sensiblement rectiligne, bien qu'il ne soit pas exclu que ladite tige-pivot 2, ou plus globalement la biellette 1, puisse éventuellement présenter une ou des portions incurvées.

De préférence, le premier organe d'articulation 4 est conçu pour offrir au moins un degré de liberté en rotation de la biellette 2 par rapport au premier organe mécanique effecteur (et former par exemple une liaison pivot), et plus particulièrement au moins deux degrés de liberté en rotation (pour former une liaison rotule à doigt, par exemple), voire trois degrés de liberté en rotation (pour former une liaison rotule, voire une liaison linéaire-annulaire ou « gouttière », par exemple).

On notera O1 le centre géométrique de rotation dudit premier organe d'articulation 4.

De manière analogue, le second organe d'articulation 6 est de préférence conçu pour offrir au moins un, au moins deux, voire trois degrés de liberté en rotation, autour d'un centre géométrique noté O2.

La longueur d'entraxe L0 pourra ainsi avantageusement correspondre, par convention, à la distance qui sépare le centre O1 du premier organe d'articulation 4 du centre O2 du second organe d'articulation 6.

De préférence, l'axe directeur (XX'), et plus globalement la tige-pivot 2, matérialise un axe de pivotement du premier organe d'articulation 4, passant par le centre O1, voire également un axe de pivotement du second organe d'articulation 6, passant par le centre O2.

Selon une variante de réalisation préférentielle, illustrée sur la figure 2, le premier organe d'articulation 4 et le second organe d'articulation 6 seront de type sphérique, par exemple de manière à pouvoir former respectivement une liaison rotule et une liaison rotule à doigt.

Le premier organe d'articulation 4 pourra avantageusement être formé d'un seul tenant avec le tronçon de tête 3 de la tige-pivot 2, par exemple sous forme d'une sphère de rotule formant l'extrémité amont de ladite tige-pivot.

Dans l'absolu, il est par ailleurs envisageable que le second organe d'articulation 6 soit fixé de manière irréversible sur le tronçon de queue 5 de la tige-pivot 2, voire formé d'un seul tenant avec ledit tronçon de queue 5.

Toutefois, le tronçon de queue 5 de la tige-pivot 2 présentera de préférence une extrémité d'accouplement filetée 5B, 7, située à l'opposé du tronçon de tête 3 tel que cela est visible sur les figures 2 et 3, sur laquelle est rapporté et vissé un embout 8 amovible qui porte le second organe d'articulation 6, tel que cela est illustré sur la figure 3.

Plus particulièrement, le tronçon de queue 5 comprendra de préférence un sous-tronçon de queue amont 5A, lisse, préférentiellement de section S3 constante, suivi d'un sous-tronçon de queue aval 5B, formant l'extrémité (initialement) libre de la tige-pivot 2, et portant un filetage 7, sur lequel est engagé l'embout 8.

Avantageusement, un tel agencement autorise notamment un réglage facile de l'entraxe L0, et par conséquent du parallélisme du train roulant commandé par la biellette 1.

De préférence, le blocage de l'embout 8 dans la position longitudinale souhaitée sera assuré par un contre-écrou 9.

Bien entendu, l'invention concerne également en tant que tel un système de direction pour véhicule qui comprend au moins un premier organe effecteur conçu pour commander un déplacement (d'orientation d'une roue directrice) ainsi qu'au moins une biellette de direction 1 selon l'invention, dont le premier organe d'articulation 4 est raccordé audit premier organe effecteur.

Plus particulièrement, le premier organe effecteur peut être formé par une crémaillère de direction montée coulissante dans un carter de direction et entraînée par un pignon associé à une colonne de direction elle-même pilotée par un volant de conduite.

Le système pourra également comporter un moteur d'assistance électrique ou hydraulique capable de délivrer un effort, et plus particulièrement un couple, d'assistance à la manoeuvre de la crémaillère.

Le mouvement de la crémaillère pourra avantageusement être transmis par la biellette 1 à un second organe effecteur, et plus particulièrement à un porte-fusée portant une roue directrice du train roulant considéré, auquel ladite biellette 1 est raccordée par son second organe d'articulation 6.

Selon un agencement préférentiel, la biellette 1 s'articulera en liaison rotule avec l'extrémité de la crémaillère, et en liaison rotule à doigt avec le porte-fusée.

L'invention se rapporte naturellement aussi à un véhicule, et plus particulièrement à un véhicule terrestre à roues directrices, équipé d'un tel système de direction, notamment de direction assistée.

Selon l'invention, le tronçon de tête 3 présente, tel que cela est illustré sur les figures 2 et 3, dans le sens amont-aval de l'axe directeur (XX'), ici le sens allant du premier organe d'articulation 4 vers le second organe d'articulation 6, de gauche à droite sur lesdites figures, une décroissance progressive 10 de sa section droite, en ceci qu'il existe au moins un plan de jauge PJ, normal à l'axe directeur (XX') et situé à une abscisse comprise entre 15 % et 40 % de l'entraxe L0 de la biellette 1, dans lequel la superficie de la section droite de la tige-pivot 2, dite « section de jauge » SJ est d'une part strictement inférieure à la superficie de la plus grande section droite S_{MAX} de ladite tige-pivot 2 (c'est-à-dire que l'on a SJ < S_{MAX}), ladite plus grande section droite S_{MAX} étant située en amont du plan de jauge PJ, et d'autre part supérieure ou égale à la superficie des sections droites S1, S2, S3, S4... situées en aval dudit plan de jauge PJ (c'est-à-dire que l'on a SJ ≥ S1, S2, S3, S4).

Par « *section droite* », on désigne la section transverse, pleine ou creuse, de la tige-pivot, qui est normale à l'axe directeur (XX') à l'abscisse considérée, et, par extension et par commodité de description, l'aire de la surface hors-tout occupée par le contour de ladite section droite dans le plan correspondant, normal à l'axe directeur.

Par « *abscisse* », on désigne la coordonnée linéaire associée à l'axe directeur (XX'), dont on considère par convention qu'elle croît dans le sens allant de l'amont vers l'aval.

Par commodité de description, on pourra désigner par « *sous-tronçon amont 3A »* du tronçon de tête 3 la portion du tronçon de tête 3 comprise entre le premier organe d'articulation 4 amont et le plan de jauge PJ, et par « *sous-tronçon aval 3B* » du tronçon de tête 3 le reste dudit tronçon de tête 3, qui s'étend depuis le plan de jauge PJ jusqu'à l'extrémité aval 12 du tronçon de tête 3.

Au sens de l'invention, la « *décroissance progressive »* 10 s'entend donc d'une tendance des sections droites de la tige-pivot 2 à diminuer globalement dans le sens amont-aval, au moins dans le tronçon de tête 3, de telle sorte que l'on confère à la tige-pivot 2 un profil qui est suffisamment décroissant dans son d'ensemble, dans le sens amont-aval, pour satisfaire au critère géométrique indiqué ci-dessus en référence à un plan de jauge PJ situé dans l'intervalle d'abscisses [10%*L0 ; 40 %*L0].

En l'occurrence, il existe au moins un plan de jauge PJ, voire une pluralité de plans de jauge possibles, situé relativement en amont, dans l'intervalle susmentionné, c'est-à-dire plus proche du premier organe d'articulation 4 que du second organe d'articulation 6, et qui forme une frontière virtuelle de séparation, de part et d'autre de laquelle on trouve d'une part, en amont, une portion de tige-pivot 2 à forte section, en l'occurrence un sous-tronçon amont 3A du tronçon de tête 3, qui contient notamment la plus grande section S_{MAX} de ladite tige-pivot 2, et d'autre part, en aval, jusqu'à l'extrémité aval du tronçon de queue 5, un ou des tronçons dont les sections droites, ici notamment les sections S1, S2, S3 et S4 sur les figures 2 et 3, sont toutes de dimensions inférieures ou égales à celles de la section de jauge SJ.

En d'autres termes on peut définir, dans la zone amont de la tige-pivot qui est comprise entre 10 % et 40 % de l'entraxe L0, un gabarit correspondant à la section de jauge SJ qui est tel que, d'une part, il existe au moins, en amont du plan de jauge PJ correspondant, plus particulièrement dans le sous-tronçon amont 3A compris entre le premier organe d'articulation 4 et le plan de jauge PJ, une section droite formant la plus grande section S_{MAX} de la tige-pivot 2 (ladite tige-pivot s'entendant comme élément monolithique réunissant le tronçon de tête 3 et le tronçon de queue 5) et dont la superficie, et plus particulièrement la dimension transverse maximale hors-tout, est strictement supérieure à celle dudit gabarit SJ, de telle sorte que le tronçon de tête 3 présente nécessairement au moins une réduction de section entre ladite plus grande section S_{MAX} et le plan de jauge PJ, distant de ladite plus grande section S_{MAX}, et que, d'autre part, l'ensemble des sections droites de la partie restante de la tige-pivot, située en aval du plan de jauge PJ, présentent des superficies (et plus particulièrement des dimensions transverses maximales hors-tout) inférieures ou égales à celle dudit gabarit SJ, de telle sorte que le caractère globalement décroissant de la tige-pivot 2, amorcé (au moins) entre la plus grande section S_{MAX} et le plan de jauge PJ, reste en quelque sorte acquis, voire s'accentue, lorsque l'on considère également la portion aval de la tige-pivot qui s'étend au-delà dudit plan de jauge PJ et du tronçon de tête 3, et qui inclut le tronçon de queue 5.

De préférence, la décroissance des sections droites de la tige-pivot est monotone sur le sous-tronçon aval 3B du tronçon de tête 3, compris entre l'abscisse de la plus grande section droite S_{MAX} et le tronçon de queue 5, voire, plus globalement, sur l'ensemble de la portion de la tige-pivot 2 comprise entre l'abscisse de la plus grande section droite S_{MAX} et l'extrémité aval du tronçon de queue 5, les sections droites successives allant uniquement en réduisant (ou tout au plus en se maintenant à une valeur strictement inférieure à celle de la plus grande section S_{MAX}) lorsque l'on parcourt la tige-pivot 2 vers l'aval, selon les abscisses croissantes, une fois passée ladite plus grande section S_{MAX}.

En référence à la figure 3, on pourrait ainsi avoir un agencement tel que : SMAX > SJ > S1 > S2 > S3 > S4.

Cependant, il n'est pas exclu qu'il existe éventuellement certaines ondulations locales du profil, compatibles avec la définition de décroissance d'ensemble donnée ci-dessus.

Ainsi, en référence à la figure 3, on pourrait également avoir : SMAX > SJ > S1 > S2 > S4 ≥ S3, la section droite S4 du sous-tronçon de queue aval 5B fileté, dont le diamètre peut être considéré en première approximation comme le diamètre nominal (externe) du filetage 7, pouvant présenter une dimension égale voire légèrement supérieure à la section S3 du sous-tronçon de queue amont 5A qui précède en amont ledit sous-tronçon de queue aval 5B fileté, dès lors que toutes les sections dudit tronçon de queue 5, ici S3 et S4, sont elles-mêmes inférieures ou égales à la section de jauge SJ.

Le cas échéant, on pourra réaliser la portion d'extrémité filetée 5B, 7 directement par roulage à partir d'un diamètre primitif correspondant à celui de la section droite S3, de préférence constante, et préférentiellement circulaire, du sous-tronçon de queue amont 5A, lisse, qui précède, en amont, la portion d'extrémité filetée 5B, 7.

Ainsi, on pourra repousser la matière du sous-tronçon de queue aval 5B de sorte d'une part à creuser un fond de filet dont la section (de fond de filet) est légèrement inférieure à la section S3 de diamètre primitif, et d'autre part à refouler le surplus de matière à l'extérieur, pour former un haut de filet dont la section d'enveloppe S4, assimilée à un cylindre centré sur l'axe directeur (XX') et dont le diamètre correspond au diamètre nominal de filetage, est légèrement supérieure à ladite section primitive S3.

Dans tous les cas, on observera que la ou les sections S3, S4 du tronçon de queue 5 sont toutes inférieures ou égale à la section de jauge SJ, et strictement inférieures à la plus grande section de la tige-pivot S_{MAX}.

Selon un autre exemple, plus général, on pourrait trouver, entre la plus grande section S_{MAX} et l'extrémité aval 12 du tronçon de tête 3, voire l'extrémité aval du tronçon de queue 5 qui marque la fin de la tige-pivot 2, des tronçons de relief de type gorges ou collets au niveau desquels la section droite varie, et notamment augmente, localement, tout en restant néanmoins strictement inférieure à la plus grande section S_{MAX}.

Le cas échéant, la section droite de la tige-pivot 2 pourra, une fois le tronçon de relief passé en direction de l'aval, se stabiliser à une dimension sensiblement constante (inférieure à celle de la plus grande section S_{MAX}), ou bien décroître de nouveau.

A titre d'exemple de tronçon de relief, on pourra envisager d'entailler dans le tronçon de tête 3 une gorge de retenue de soufflet (non représentée) destinée à accueillir un collet de soufflet de crémaillère protégeant le premier organe d'articulation 4.

En pratique, le tronçon de tête 3, et plus globalement la tige-pivot 2, est donc dans tous les cas sensiblement plus épais(se) du côté du premier organe d'articulation 4 amont que du côté du tronçon de queue 5, vers lequel il (elle) tend à s'affiner, en réduisant progressivement sa section droite dans le sens amont-aval allant dudit premier organe d'articulation 4 le plus proche du plan de jauge PJ vers le second organe d'articulation 6 le plus éloigné dudit plan de jauge PJ.

Avantageusement, en prévoyant, dans une zone amont de la biellette 1 identifiée comme relativement sensible au phénomène de flambage, un tronçon de tête 3 dont la section décroît progressivement, au fur et à mesure que l'on s'éloigne du premier organe d'articulation 4, on parvient à concentrer la matière constitutive de la tige-pivot 2 dans une zone particulièrement sollicitée, afin de conférer à ladite biellette 1 la rigidité (notamment en flexion) adaptée à l'intensité des efforts auxquels elle est soumise en conditions normales de fonctionnement, tout en répartissant ladite matière constitutive afin d'éliminer toute surépaisseur superflue.

A ce titre, la figure 4, qui représente en superposition une tige-pivot 2' de l'art antérieur et une tige pivot 2 selon l'invention, permet de visualiser immédiatement l'effet "d'amaigrissement" obtenu par la réduction des sections droites, tant dans le tronçon de tête 3 que dans le tronçon de queue 5, en faisant apparaître les surépaisseurs de matière 11 qui s'avèrent *in fine* superflues du strict point de vue du comportement mécanique.

En particulier, on remarquera la différence de diamètre entre le tronçon de tête 3' massif et de section constante d'une biellette connue (figure 1) et le tronçon de tête décroissant 3, plus fin, de la biellette 1 conforme à l'invention (figures 2 et 3), ou encore entre le diamètre du tronçon de queue 5' de ladite biellette connue et celui du tronçon de queue 5, également plus fin, selon l'invention.

Avantageusement, l'élimination de la matière superflue 11 représente une véritable optimisation de la biellette 1, en ceci que non seulement elle procure un gain de poids appréciable, mais également qu'elle ne dégrade aucunement les capacités fonctionnelles de ladite biellette 1 à d'une part résister aux sollicitations normales en traction, compression et flambage, et à d'autre part se déformer plastiquement, lorsqu'elle est sollicitée au-delà d'un seuil d'effort prédéterminé, pour absorber par exemple l'énergie d'un choc en cas d'accident.

A ce titre, on notera notamment que, en prévoyant une tige pivot 2 qui présente une réduction progressive de section, orientée dans le sens amont-aval, *via* un tronçon de tête 3 décroissant, on peut obtenir un comportement de déformation prévisible sans avoir à usiner spécifiquement une gorge fusible 5'A dans la portion de queue 5, 5', comme cela était le cas précédemment.

En particulier, tel que cela a été mentionné plus haut, on pourra conférer directement au tronçon de queue 5 sa forme définitive simplement en roulant le filetage 7 à partir d'un tronçon de queue 5 initialement lisse de section S3 (primitive) constante, sans avoir par exemple à reprendre spécifiquement par usinage, notamment par dressage/chariotage, le sous-tronçon de queue amont 5A qui précède l'extrémité filetée 5B, 7 pour y creuser une quelconque gorge fusible.

L'agencement propre à l'invention permet donc de concilier de nombreux impératifs, tout en proposant de surcroît une biellette 1, et plus particulièrement un tige-pivot 2, relativement facile et peu onéreuse à fabriquer.

De préférence, le tronçon de tête 3 et/ou le tronçon de queue 5 présente sensiblement une géométrie de révolution autour de l'axe directeur (XX').

Ainsi, l'un et/ou l'autre de ces tronçons de tête 3 et de queue 5, et préférentiellement l'ensemble de la tige-pivot 2, pourront être formés à partir d'un rondin ou d'un tube circulaire.

Par commodité de description, on pourra par conséquent assimiler la dimension transverse hors-tout d'une section droite S_{MAX}, SJ, S1, S2, S3, S4, mesurée transversalement (radialement) à l'axe directeur (XX'), à un « diamètre ».

Bien entendu, la tige-pivot 2 pourra être réalisée dans tout matériau rigide approprié, notamment dans un alliage métallique tel que l'acier, éventuellement l'acier inoxydable, un alliage d'aluminium, etc.

De préférence, le tronçon de tête 3 de la tige-pivot 2 occupe à lui seul entre 30 % et 50 % de l'entraxe L0 de la biellette 1, c'est-à-dire sensiblement le tiers voire la moitié amont de la biellette 1, compté depuis le centre O1 du premier organe d'articulation 4.

Par ailleurs, le diamètre hors-tout de la plus petite section droite qui appartient au sous-tronçon aval 3B du tronçon de tête 3 situé en aval de la plus grande section droite S_{MAX} dudit tronçon de tête, ici, à titre de simple exemple, le diamètre de la section S2 sur la figure 3, est de préférence supérieur ou égal, voire strictement supérieur, au diamètre hors-tout de la plus grande section droite du tronçon de queue 5, c'est-à-dire ici, à titre de simple exemple, au diamètre de la section S4 = MAX(S3, S4) sur la figure 3.

En l'espèce, on aura donc, sur l'exemple de la figure 3 : S2 > S4, et a *fortiori* S2 > S3.

En d'autres termes, l'ensemble des sections droites de la portion de la tige-pivot 2 comprise entre la plus grande section S_{MAX} de ladite tige-pivot 2 et l'extrémité aval 12 du tronçon de tête 3, c'est-à-dire l'ensemble des sections droites du sous-tronçon aval 3B dudit tronçon de tête 3, sont toutes plus fortes que chacune des sections droites considérées dans le tronçon de queue 5 qui prolonge ledit tronçon de tête 3, de telle sorte que l'on observe un amincissement progressif effectif entre le tronçon de tête 3 et le tronçon de queue 5.

Un tel agencement permet avantageusement de favoriser la déformation de la biellette au flambage dans une zone choisie, c'est-à-dire de prédéterminer par construction la localisation la zone martyre préférentielle, ici en l'occurrence légèrement en aval du tronçon de tête 3, et plus particulièrement dans le sous-tronçon de queue amont 5A, par lequel le tronçon de queue 5 est raccordé au sous-tronçon aval 3B du tronçon de tête, et qui présente ici une section S3 sur les figures 2 et 3.

Bien entendu, différentes dispositions constructives pourront permettre de conférer au tronçon de tête 3 la décroisance 10 de section souhaitée.

Selon une possibilité de réalisation, le tronçon de tête 3 peut comprendre de préférence, le long de l'axe directeur (XX'), une pluralité de décrochements 13, 14, 15 définissant une succession de sous-tronçons épaulés 16, 17, 18, 19 dont les sections droites respectives (ici S_{MAX}, SJ, S1 puis S2 sur la figure 3), de préférence constantes sur leurs sous-tronçons respectifs, décroissent de façon monotone dans le sens amont-aval.

En d'autres termes, le tronçon de tête 3 comprend de préférence une pluralité de réductions de diamètre successives, étagées axialement à distance les unes des autres, qui forment une pluralité d'épaulements 13, 14, 15 successifs agencés en gradins descendants dans le sens allant de l'amont vers l'aval.

La décroissance 10 peut ainsi se répartir de façon discrète, par "sauts" ponctuels successifs.

Le cas échéant, l'étalement axial (longitudinal) de la succession complète (et monotone) des épaulements 13, 14, 15 du tronçon de tête, c'est-à-dire par exemple la distance séparant axialement les deux épaulements de ladite succession les plus éloignés l'un de l'autre, pourra couvrir au moins 5%, au moins 10 %, voire au moins 20 % de la longueur d'entraxe L0.

Selon une autre possibilité de réalisation, qui peut éventuellement se substituer ou se combiner à la précédente, le tronçon de tête 3 comprend au moins un sous-tronçon tronconique 20 (tel que celui représenté en pointillés sur la figure 3) dont la grande base est orientée vers l'amont et la petite base est orientée vers l'aval, et dont la hauteur, mesurée le long de l'axe directeur (XX'), avec lequel elle se confond sensiblement de préférence, représente au moins 5 %, au moins 10 %, voire au moins 20 % de la longueur d'entraxe.

La décroissance 10 peut ainsi se répartir de façon continue, selon un profil régulier et doux.

Le cas échéant, le tronc de cône 20 pourra être légèrement bombé vers l'extérieur (c'est-à-dire présenter une courbure convexe), ou au contraire présenter une courbure concave entre sa grande base et sa petite base.

Bien entendu, il est envisageable de prévoir une décroissance 10 sous forme d'une alternance d'épaulements puis de troncs de cônes, qui vont en réduisant la section de la tige-pivot d'amont en aval.

De préférence, la transition entre le tronçon de tête 3 et le tronçon de queue 5 est marquée par un tronçon intermédiaire 21 qui est pourvu d'au moins un organe de manipulation 22 qui modifie la forme du contour de la section droite S21 dudit tronçon intermédiaire 21 par rapport au contour de la section droite (S2, sur les figures 2 et 3) du tronçon de tête 3 qui le précède (immédiatement), et/ou par rapport au contour de la section droite (S3, sur les figures 2 et 3) du tronçon de queue 5 qui le suit (immédiatement), de sorte à faciliter la préhension et la manipulation de ladite tige-pivot 2 en rotation autour de son axe directeur (XX').

Ainsi, selon une caractéristique préférentielle qui peut constituer une définition alternative voire équivalente de l'invention, indépendamment ou en combinaison des considérations liées au positionnement du plan de jauge PJ par rapport à l'entraxe L0, il existe au moins un plan de jauge PJ, par rapport auquel la décroissance 10 vérifie les propriétés mentionnées plus haut, qui est avantageusement situé entre le premier organe d'articulation 4 amont et ledit tronçon intermédiaire 21, de préférence à une abscisse comprise entre 30 % et 80 % de la longueur dudit tronçon tête 3, longueur qui est mesurée de préférence entre le centre O1 dudit premier organe d'articulation 4 et la limite amont du changement de contour marquant le début du tronçon intermédiaire 21.

De préférence, le tronçon intermédiaire 21 sera situé dans une zone médiane de la biellette 1, par exemple entre 40 % et 60 % environ de la longueur d'entraxe L0.

Le ou les organes de manipulation 22 pourront bien entendu prendre différentes formes aptes à "briser" le contour circulaire lisse de révolution de la tige-pivot, par exemple la forme de dents ou de cannelures axiales, ou bien d'une ou plusieurs rainures axiales, ou bien encore d'un ou plusieurs trous radiaux, borgnes ou traversants, destinés à recevoir un outil de manipulation (clef) de forme conjuguée.

Toutefois, selon une variante de réalisation particulièrement préférentielle, le tronçon intermédiaire 21 comprend au moins un, et de préférence une pluralité d'organes de manipulation 22 formés chacun par un méplat, tel que cela est notamment illustré sur les figures 2 et 3.

Plus particulièrement, le tronçon intermédiaire 21 pourra comprendre une pluralité de méplats 22 également répartis autour de l'axe directeur (XX'), par exemple sous forme d'une structure de préhension à deux pans, à quatre pans ou à six pans (cas de la figure 3).

Un tel agencement est en effet particulièrement simple et peu coûteux à mettre en oeuvre, tout en étant facilement accessible et manipulable à l'aide d'un outillage usuel (de type clef plate), lors par exemple du réglage du parallélisme.

De préférence, la section droite S21 du tronçon intermédiaire 21, et/ou plus particulièrement sa dimension transverse maximale (par exemple le diamètre du cercle d'enveloppe dans lequel s'inscrit la figure à plusieurs pans) sera inférieure ou égale, voire strictement inférieure à la section droite S2 qui précède immédiatement ledit tronçon intermédiaire 21 en amont de celui-ci, respectivement à la dimension transverse maximale de cette dernière.

De même, la section S21 du tronçon intermédiaire 21 (et/ou sa dimension transverse maximale), sera de préférence supérieure ou égale, voire strictement supérieure, à la section S3 qui suit immédiatement ledit tronçon intermédiaire (respectivement à sa dimension transverse maximale).

On aura ainsi de préférence S2 > S21 > S3.

De préférence, on aura également S21 ≥ S4.

A titre indicatif, le rapport de réduction de section du tronçon de tête, qui correspond au quotient R = diamètre(S2) / diamètre(S_{MAX}) du petit diamètre de la section droite S2 du tronçon de tête 3, qui précède immédiatement le tronçon intermédiaire 21, par le grand diamètre de la plus grande section droite S_{MAX} dudit tronçon de tête 3, pourra être sensiblement compris entre 0,9 et 0,6.

De manière alternative ou complémentaire, le tronçon de tête 3 pourra présenter globalement, sur la longueur du segment compris entre la plus grande section S_{MAX} et le tronçon intermédiaire 21, un taux d'étranglement linéaire moyen compris entre 0,05 mm/cm et 0,5 mm/cm, par exemple en considérant 2 mm à 6 mm perdus au diamètre (soit ici S_{MAX} - S2) pour 100 mm à 300 mm de longueur mesurée entre S_{MAX} et l'extrémité aval 12, ce taux d'étranglement moyen pouvant le cas échéant correspondre plus particulièrement à la pente du tronçon tronconique 20.

Par exemple, on pourra envisager de passer d'un diamètre maximal diamètre(S_{MAX}) de l'ordre de 18 mm à un diamètre d'extrémité aval 12 du tronçon amont 3 diamètre(S2) de l'ordre de 12 mm, ou, respectivement, de 14 mm environ à 12 mm environ, et ce pour un tronçon de tête 3 dont la longueur, mesurée selon l'axe directeur (XX'), est comprise entre 100 mm et 300 mm.

De telles proportions permettent avantageusement d'obtenir le comportement mécanique souhaité tout en bénéficiant de l'allègement déjà évoqué plus haut.

Bien entendu, l'invention n'est nullement limitée aux variantes de réalisation décrites, l'homme du métier étant notamment à même d'isoler ou de combiner librement entre elles l'une ou l'autre des caractéristiques décrites dans ce qui précède.

A titre d'exemple, il serait envisageable de définir l'emplacement du tronçon de tête 3, et la zone d'effet de la décroissance 10 conforme à l'invention, par rapport au tronçon intermédiaire 21.

Ainsi, l'invention peut concerner en tant que telle, le cas échéant en combinaison avec l'une ou l'autre des caractéristiques décrites dans ce qui précède, une biellette de direction 1 comprenant une tige-pivot 2 qui s'étend longitudinalement selon un axe directeur (XX'), ladite tige-pivot possédant un tronçon intermédiaire de préhension 21 qui comporte un ou plusieurs organes de manipulation 22 conçus pour permettre la préhension et la manipulation de ladite tige-pivot 2 en rotation autour de son axe directeur (XX'), et de part et d'autre duquel s'étendent, d'un seul tenant l'un avec l'autre, d'une part un tronçon de tête 3 qui porte un premier organe d'articulation 4 amont, tel qu'une sphère de rotule, destiné à l'accouplement de la biellette avec un premier organe effecteur, du genre crémaillère de direction, et d'autre part un tronçon de queue 5 qui porte un second organe d'articulation 6 aval, tel qu'un palier sphérique de rotule, destiné à l'accouplement de la biellette avec un second organe effecteur, du genre porte-fusée, ladite tige-pivot 2 étant caractérisée en ce que son tronçon de tête 3 présente une section transverse (section droite) qui décroît globalement dans le sens amont-aval, de telle sorte qu'il existe au moins un plan de jauge PJ, normal à l'axe directeur (XX') et situé à une abscisse comprise entre 20 % (voire 30 %) et 80 % de la longueur dudit tronçon de tête 3, dans lequel la superficie de la section droite de la tige-pivot 2, dite « première section de jauge » SJ, est strictement inférieure à la superficie de la plus grande section droite S_{MAX} située en amont du plan de jauge, et supérieure ou égale à la superficie des sections droites S1, S2, S3, S4 situées en aval du plan de jauge PJ.

## Revendications

1. Biellette de direction (1) comportant une tige-pivot (2) qui comprend d'une part un tronçon de tête (3) sur lequel est fixé un premier organe d'articulation (4) amont, tel qu'une sphère de rotule, destiné à l'accouplement de la biellette avec un premier organe effecteur, du genre crémaillère de direction, et d'autre part un tronçon de queue (5) sur lequel est fixé un second organe d'articulation (6) aval, tel qu'un palier sphérique de rotule, destiné à l'accouplement de la biellette avec un second organe effecteur, du genre porte-fusée, le tronçon de tête (3) et le tronçon de queue (5) s'étendant longitudinalement d'un seul tenant, selon un axe directeur (XX'), sur la majorité de la longueur d'entraxe (L0) qui sépare le premier organe d'articulation (4) du second organe d'articulation (6), ladite tige-pivot étant **caractérisée en ce que** le tronçon de tête (3) présente, dans le sens amont-aval de l'axe directeur (XX'), une décroissance progressive (10) de sa section droite, en ceci qu'il existe au moins un plan de jauge (PJ), normal à l'axe directeur (XX') et situé à une abscisse comprise entre 15 % et 40 % de l'entraxe (L0) de la biellette, dans lequel la superficie de la section droite de la tige-pivot, dite « section de jauge » (SJ) est d'une part strictement inférieure à la superficie de la plus grande section droite (S_{MAX}) de ladite tige-pivot, située en amont du plan de jauge (PJ), et d'autre part supérieure ou égale à la superficie des sections droites (S1, S2, S3, S4) situées en aval dudit plan de jauge (PJ).

2. Biellette de direction selon la revendication 1 **caractérisée en ce que** le tronçon de tête (3) comprend, le long de l'axe directeur (XX'), une pluralité de décrochements (13, 14, 15) définissant une succession de sous-tronçons épaulés (16, 17, 18, 19) dont les sections droites respectives décroissent de façon monotone dans le sens amont-aval.

3. Biellette selon la revendication 1 ou 2 **caractérisée en ce que** le tronçon de tête (3) comprend au moins un sous-tronçon tronconique (20) dont la grande base est orientée vers l'amont et la petite base est orientée vers l'aval, et dont la hauteur, mesurée le long de l'axe directeur (XX'), représente au moins 5 %, au moins 10 %, voire au moins 20 % de la longueur d'entraxe (L0).

4. Biellette selon l'une des revendications précédentes **caractérisée en ce que** le tronçon de tête (3) et/ou le tronçon de queue (5) présente sensiblement une géométrie de révolution autour de l'axe directeur (XX') et **en ce que** la transition entre le tronçon de tête (3) et le tronçon de queue (5) est marquée par un tronçon intermédiaire (21) qui est pourvu d'au moins un organe de manipulation (22) qui modifie la forme du contour de la section droite (S21) dudit tronçon intermédiaire par rapport au contour de la section droite (S2) du tronçon de tête (3) qui le précède, et/ou par rapport au contour de la section droite (S3) du tronçon de queue (5) qui le suit, de sorte à faciliter la préhension et la manipulation de ladite tige-pivot (2) en rotation autour de son axe directeur (XX').

5. Biellette selon la revendication 4 **caractérisée en ce que** le tronçon intermédiaire (21) comprend au moins un, et de préférence une pluralité d'organes de manipulation (22) formés chacun par un méplat.

6. Biellette selon la revendication 5 **caractérisée en ce que** le tronçon intermédiaire (21) comprend une pluralité de méplats (22) également répartis autour de l'axe directeur (XX'), par exemple sous forme d'une structure de préhension à deux pans, à quatre pans ou à six pans.

7. Biellette selon l'une des revendications 4 à 6 **caractérisée en ce que** le rapport de réduction de section du tronçon de tête, qui correspond au quotient R = diamètre(S2) / diamètre(S_{MAX}) du petit diamètre de la section droite (S2) du tronçon de tête (3) qui précède immédiatement le tronçon intermédiaire (21) par le grand diamètre qui correspond à la plus grande section droite (S_{MAX}) dudit tronçon de tête (3), est sensiblement compris entre 0,9 et 0,6.

8. Biellette selon l'une des revendications précédentes **caractérisée en ce que** le tronçon de tête (3) de la tige-pivot (2) occupe à lui seul entre 30 % et 50 % de l'entraxe (L0) de la biellette (1), et **en ce que** le diamètre hors-tout de la plus petite section droite (S2) qui appartient au sous-tronçon aval (3B) dudit tronçon de tête, qui est situé en aval de la plus grande section droite (S_{MAX}) dudit tronçon de tête, est supérieur ou égal au diamètre hors-tout de la plus grande section droite (S4) du tronçon de queue (5).

9. Biellette selon l'une des revendications précédentes **caractérisée en ce que** le tronçon de queue (5) de la tige-pivot (2) présente une extrémité d'accouplement filetée (5B, 7) sur laquelle est rapporté et vissé un embout (8) amovible qui porte le second organe d'articulation (6).

10. Système de direction pour véhicule comprenant au moins un premier organe effecteur conçu pour commander un déplacement, du genre crémaillère de direction montée coulissante dans un carter de direction, ainsi qu'au moins une biellette de direction (1) selon l'une des revendications précédentes, dont le premier organe d'articulation (4) est raccordé audit premier organe effecteur.

## Patentansprüche

1. Lenkschubstange (1), einen Drehzapfen (2) umfassend, der einerseits einen Kopfabschnitt (3) umfasst, auf dem ein erstes vorgelagertes Gelenkelement (4), wie eine Gelenkkugel befestigt ist, das zum Verbinden der Schubstange mit einem ersten Wirkorgan in der Art einer Zahnstange bestimmt ist, und andererseits einen Endabschnitt (5), auf dem ein zweites nachgelagertes Gelenkelement (6), wie ein kugelförmiges Lager befestigt ist, das zum Verbinden der Schubstange mit einem zweiten Wirkorgan in der Art eines Achsschenkels bestimmt ist, wobei sich der Kopfabschnitt (3) und der Endabschnitt (5) in einem Teil in Längsrichtung entlang einer Richtungsachse (XX') über den Großteil der Länge des Achsabstands (L0) erstrecken, der das erste Gelenkelement (4) vom zweiten Gelenkelement (6) trennt, wobei der besagte Drehzapfen **dadurch gekennzeichnet ist, dass** der Kopfabschnitt (3) in der Richtung vorgelagerter-nachgelagerter Teil der Richtungsachse (XX') eine progressive Verjüngung (10) seines geraden Abschnitts aufweist, dadurch, dass es zumindest eine Bezugsebene (PJ) gibt, die normal zur Richtungsachse (XX') verläuft und auf einer Abszisse zwischen 15% und 40% des Achsabstands (L0) der Schubstange liegt, wobei die Oberfläche des geraden Abschnitts des Drehzapfens, der "Bezugsabschnitt" (SJ) genannt wird, einerseits streng genommen kleiner ist, als die Oberfläche des größten geraden Abschnitts (S_{MAX}) des besagten Drehzapfens, der sich der Bezugsebene (PJ) vorgelagert befindet, und andererseits größer oder gleich der Oberfläche der geraden Abschnitte (S1, S2, S3, S4), die sich der Bezugsebene (PJ) nachgelagert befinden.

2. Lenkschubstange nach Anspruch 1, **dadurch gekennzeichnet, dass** der Kopfabschnitt (3) entlang der Richtungsachse (XX') eine Vielzahl von Absätzen (13, 14, 15) umfasst, die eine Abfolge von Unterabschnitten mit Ansätzen (16, 17, 18, 19) definieren, deren jeweilige gerade Abschnitte sich in monotoner Form in die Richtung von vorgelagert nach nachgelagert verjüngen.

3. Schubstange nach Anspruch 1 oder 2, **dadurch gekennzeichnet, dass** der Kopfabschnitt (3) zumindest einen kegelstumpfförmigen Unterabschnitt (20) umfasst, dessen große Basis in Richtung der vorgelagerten Seite ausgerichtet, und dessen kleine Basis in Richtung der nachgelagerten Seite ausgerichtet ist, und dessen Höhe entlang der Richtungsachse (XX') gemessen zumindest 5%, zumindest 10%, oder gar zumindest 20% der Länge des Achsabstands (L0) darstellt.

4. Schubstange nach einem der vorherigen Ansprüche, **dadurch gekennzeichnet, dass** der Kopfabschnitt (3) und/ oder der Endabschnitt (5) in etwa eine Rotationsgeometrie um die Richtungsachse (XX') aufweist und dadurch, dass der Übergang zwischen dem Kopfabschnitt (3) und dem Endabschnitt (5) durch einen Zwischenabschnitt (21) gekennzeichnet ist, der mit zumindest einem Manipulationselement (22) versehen ist, das die Form der Kontur des geraden Abschnitts (S21) des besagten Zwischenabschnitts im Verhältnis zur Kontur des geraden Abschnitts (S2) des Kopfabschnitts (3) der ihm vorangeht, und/ oder im Verhältnis zur Kontur des geraden Abschnitts (S3) des Endabschnitts (5), das diesem nachfolgt, verändert, um das Ergreifen und die drehende Manipulation des besagten Drehzapfens (2) um seine Richtungsachse (XX') zu erleichtern.

5. Schubstange nach Anspruch 4, **dadurch gekennzeichnet, dass** der Zwischenabschnitt (21) zumindest ein und vorzugsweise eine Vielzahl von Manipulationselementen (22) umfasst, die jeweils durch eine Abflachung gebildet werden.

6. Schubstange nach Anspruch 5, **dadurch gekennzeichnet, dass** der Zwischenabschnitt (21) eine Vielzahl von Abflachungen (22) umfasst, die ebenfalls gleichförmig um die Richtungsachse (XX') verteilt sind, beispielsweise in Form einer Greifstruktur mit zwei, vier oder sechs Seiten.

7. Schubstange nach einem der Ansprüche 4 bis 6, **dadurch gekennzeichnet, dass** das Querschnitt-Verjüngungsverhältnis des Kopfabschnitts, das dem Quotienten R = Durchmesser (S2) / Durchmesser (S_{MAX}) des kleinen Durchmessers des geraden Abschnitts (S2) des Kopfabschnitts (3), der unmittelbar vor dem Zwischenabschnitt (21) liegt, durch den großen Durchmesser, der dem größten geraden Abschnitt (S_{MAX}) des besagten Kopfabschnitts (3) entspricht, in etwa zwischen 0,9 und 0,6 liegt.

8. Schubstange nach einem der vorherigen Ansprüche, **dadurch gekennzeichnet, dass** der Kopfabschnitt (3) des Drehzapfens (2) alleine zwischen 30% und 50% des Achsabstandes (L0) der Schubstange (1) einnimmt, und dadurch, dass der Gesamtdurchmesser des kleinsten geraden Abschnitts (S2), der zum nachgelagerten Unterabschnitt (3B) des besagten Kopfabschnitts gehört, der sich nach dem größten geraden Abschnitt (S_{MAX}) des besagten Kopfabschnitts befindet, größer oder gleich dem Gesamtdurchmesser des größten geraden Abschnitts (S4) des Endabschnitts (5) ist.

9. Schubstange nach einem der vorherigen Ansprüche, **dadurch gekennzeichnet, dass** der Endabschnitt (5) des Drehzapfens (2) ein Koppelendstück mit Gewinde (5B, 7) aufweist, auf dem ein abnehmbares Endstück (8) angebracht und verschraubt ist, das das zweite Gelenkelement (6) trägt.

10. Lenkanlage für ein Fahrzeug, zumindest ein erstes Wirkorgan umfassend, das gestaltet ist, um eine Bewegung zu steuern, in der Art einer Lenkzahnstange, die gleitend in einem Lenkgehäuse montiert ist, sowie zumindest eine Lenkschubstange (1) nach einem der vorherigen Ansprüche, deren erstes Gelenkelement (4) mit dem besagten ersten Wirkorgan verbunden ist.

## Claims

1. A steering connecting rod (1) including a pivot rod (2) which comprises on the one hand a head segment (3) on which is fastened a first upstream hinge member (4), such as a ball joint sphere, intended for the coupling of the connecting rod with a first effector member, of the steering rack type, and on the other hand a tail segment (5) on which is fastened a second downstream hinge member (6), such as a ball joint spherical bearing, intended for the coupling of the connecting rod with a second effector member, of the stub axle type, the head segment (3) and the tail segment (5) longitudinally extending in one piece, along a steering axis (XX'), over the majority of the centre-to-centre distance length (L0) which separates the first hinge member (4) from the second hinge member (6), said pivot rod being **characterized in that** the head segment (3) has, in the upstream-downstream direction of the steering axis (XX'), a progressive decrease (10) of its cross section, **in that** there is at least one gauge plane (PJ), normal to the steering axis (XX') and located at an abscissa comprised between 15% and 40% of the centre-to-centre distance (L0) of the connecting rod, in which the area of the cross section of the pivot rod, called « gauge section » (SJ) is on the one hand strictly lower than the area of the largest cross section (S_{MAX}) of said pivot rod, located upstream of the gauge plane (PJ), and on the other hand greater than or equal to the area of the cross sections (S1, S2, S3, S4) located downstream of said gauge plane (PJ).

2. The connecting rod according to claim 1 **characterized in that** the head segment (3) comprises, along the steering axis (XX'), a plurality of steps (13, 14, 15) defining a succession of stepped sub-segments (16, 17, 18, 19) whose respective cross sections monotonically decrease in the upstream-downstream direction.

3. The connecting rod according to claim 1 or 2 **characterized in that** the head segment (3) comprises at least one truncated-cone sub-segment (20) whose large base is oriented upstream and the small base is oriented downstream, and whose height, measured along the steering axis (XX'), is at least 5%, at least 10%, or even at least 20% of the centre-to-centre distance length (L0).

4. The connecting rod according to any of the preceding claims **characterized in that** the head segment (3) and/or the tail segment (5) substantially has a geometry of revolution about the steering axis (XX'), and that the transition between the head segment (3) and the tail segment (5) is marked by an intermediate segment (21) which is provided with at least one handling member (22) which modifies the shape of the contour of the cross section (S21) of said intermediate segment relative to the contour of the cross section (S2) of the head segment (3) which precedes it, and/or relative to the contour of the cross section (S3) of the tail segment (5) which follows it, so as to facilitate the gripping and the handling of said pivot rod (2) in rotation about its steering axis (XX').

5. The connecting rod according to claim 4 **characterized in that** the intermediate segment (21) comprises at least one, and preferably a plurality of handling members (22) each formed by a flat.

6. The connecting rod according to claim 5 **characterized in that** the intermediate segment (21) comprises a plurality of flats (22) equally distributed about the steering axis (XX'), for example in the form of a two-sided, four-sided or hexagonal gripping structure.

7. The connecting rod according to any of claims 4 to 6 **characterized in that** the section reduction ratio of the head segment, which corresponds to the quotient R= diameter (S2)/diameter (S_{MAX}) of the small diameter of the cross section (S2) of the head segment (3) which immediately precedes the intermediate segment (21) by the large diameter which corresponds to the largest cross section (S_{MAX}) of said head segment (3), is substantially comprised between 0.9 and 0.6.

8. The connecting rod according to any of the preceding claims **characterized in that** the head segment (3) of the pivot rod (2) occupies alone between 30% and 50% of the centre-to-centre distance (L0) of the connecting rod (1), and **in that** the overall diameter of the smallest cross section (S2) which belongs to the downstream sub-segment (3B) of said head segment, which is located downstream of the largest cross section (S_{MAX}) of said head segment, is greater than or equal to the overall diameter of the largest cross section (S4) of the tail segment (5).

9. The connecting rod according to any of the preceding claims **characterized in that** the tail segment (5) of the pivot rod (2) has a threaded coupling end (5B, 7) on which a removable end piece (8) which carries the second hinge member (6) is attached and screwed.

10. A steering system for vehicle comprising at least one first effector member designed to control a displacement, of the kind of steering rack slidingly mounted in a steering housing, as well as at least one steering connecting rod (1) according to any of the preceding claims, whose first hinge member (4) is connected to said first effector member.
